# EUROPEAN PATENT APPLICATION

(11) **EP 4 579 703 A2**
(43) Date of publication of application: **02.07.2025**
(21) Application number: 24219131.0
(22) Date of filing: 11.12.2024
(51) Int. Cl.: H01G 4/012, H01G 4/232, H01G 4/12, H01G 4/30

(54) **MULTI-LAYER ELECTRONIC COMPONENT WITH COMPRISING FOUR EXTERNAL ELECTRODES AND INSULATING BAND THEREBETWEEN**

(30) Priority: 29.12.2023 KR 20230197086
(71) Applicant: Samsung Electro-Mechanics Co., Ltd., Suwon-si, Gyeonggi-do (KR)
(72) Inventor: Park, Myeong Hak, Suwon-si, Gyeonggi-do (KR); Hong, Ki Pyo, Suwon-si, Gyeonggi-do (KR)
(74) Representative: Grünecker Patent- und Rechtsanwälte PartG mbB

(57) **Abstract**

A multilayer electronic component (100) comprising:

a body (110) including a dielectric layer (111) and first and second internal electrode layers (121, 122) alternately disposed with the dielectric layer (111) positioned between them in a first direction (T), the body (110) further including a first surface (1) and a second surface (2) opposing each other in the first direction (T), a third surface (3) and a fourth surface (4) connected to the first and second surfaces (1, 2) and opposing each other in a second direction (L), and a fifth surface (5) and a sixth surface (6) connected to the first to fourth surfaces (1, 2, 3, 4) and opposing each other in a third direction (W), the first internal electrode layer (121) including a first internal electrode (121a) exposed to the fifth and sixth surfaces (5, 6), and a first dummy electrode (121b) spaced apart from the first internal electrode (121a), and the second internal electrode layer (122) including a second internal electrode (122a) exposed to the third and fourth surfaces (3, 4), and a second dummy electrode (122b) spaced apart from the second internal electrode (122a);

- a first external electrode (131) and a second external electrode (132) disposed on the third and fourth surfaces (3, 4), respectively, and connected to the second internal electrode (122a);

- a third external electrode (133) and a fourth external electrode (134) disposed on the fifth and sixth surfaces (5, 6), respectively, and connected to the first internal electrode (122a);

- a first insulating portion (141) and a second insulating portion (142) spaced apart from each other in the second direction (L) with the third external electrode (133) interposed therebetween on the fifth surface (5); and

- a third insulating portion (143) and a fourth insulating portion (144) spaced apart from each other in the second direction (L) with the fourth external electrode (134) interposed therebetween on the sixth surface,

wherein the first dummy electrode (121b) overlaps an exposed portion of the second internal electrode (122a) in the first direction (T), and the second dummy electrode (122b) overlaps an exposed portion of the first internal electrode (121a) in the first direction (T).

Further, the first to fourth insulating portions (141, 142, 143, 144) are each connected to at least a portion of the exposed portion of the first internal electrode (121a).

## Description

### CROSS-REFERENCE TO RELATED APPLICATION(S)

This application claims benefit of priority to Korean Patent Application No. 10-2023-0197086 filed on December 29, 2023 in the Korean Intellectual Property Office, the disclosure of which is incorporated herein by reference in its entirety.

### TECHNICAL FIELD

The present disclosure relates to a multilayer electronic component.

Multilayer Ceramic Capacitors (MLCCs), as multilayer electronic components, are chip-type capacitors mounted on printed circuit boards of various electronic products, such as imaging devices, for example, liquid crystal displays (LCDs) and plasma display panels (PDPs), computers, smartphones, mobile phones and the like, and serve to charge or discharge electricity.

Such multilayer ceramic capacitors may be used as components in various electronic devices due to their small size, high capacitance, and ease of mounting. As various electronic devices such as computers and mobile devices are miniaturized and have higher output, the demand for miniaturization and higher capacitance for multilayer ceramic capacitors is increasing.

Meanwhile, depending on the environment in which MLCCs are used, multi-terminal MLCCs are sometimes used instead of the typical two-terminal MLCCs, and among these, three-terminal MLCCs have a structure in which signal patterns and ground patterns of different shapes are alternately laminated. At this time, in the case of the ground pattern, a short-width external electrode should be exposed laterally, and a signal pattern, in which the external electrode is not exposed in the same direction, is laminated alternately, thereby generating a step portion. A decrease in the density of the step portion during lamination and compression may cause delamination. Such delamination may provide a moisture penetration path, whichcan cause decrease reliability. To resolve this problem, a structure that significantly reduces the step portion by changing the shape of a dummy electrode or lead portion is adopted.

### SUMMARY

An aspect of the present disclosure is to provide a multilayer electronic component with improved step portion height.

An aspect of the present disclosure is to provide a multilayer electronic component with improved moisture resistance reliability.

According to an aspect of the present disclosure, a multilayer electronic component includes a body comprising a dielectric layer and first and second internal electrode layers alternately disposed with the dielectric layer therebetween in a first direction, and including a first surface and a second surface opposing each other in the first direction, a third surface and a fourth surface connected to the first and second surfaces and opposing each other in a second direction, and a fifth surface and a sixth surface connected to the first to fourth surfaces and opposing each other in a third direction, the first internal electrode layer including a first internal electrode exposed to the fifth and sixth surfaces, and a first dummy electrode disposed to be spaced apart from the first internal electrode, and the second internal electrode layer including a second internal electrode exposed to the third and fourth surfaces, and a second dummy electrode disposed to be spaced apart from the second internal electrode; a first external electrode and a second external electrode disposed on the third and fourth surfaces, respectively, and connected to the second internal electrode; a third external electrode and a fourth external electrode disposed on the fifth and sixth surfaces, respectively, and connected to the first internal electrode; a first insulating portion and a second insulating portion disposed to be spaced apart from each other in the second direction with the third external electrode interposed therebetween on the fifth surface; and a third insulating portion and a fourth insulating portion disposed to be spaced apart from each other in the second direction with the fourth external electrode interposed therebetween on the sixth surface. The first dummy electrode overlaps an exposed portion of the second internal electrode in the first direction, and the second dummy electrode overlaps an exposed portion of the first internal electrode in the first direction.

According to an aspect of the present disclosure, a multilayer electronic component includes a body comprising a dielectric layer and first and second internal electrode layers alternately disposed with the dielectric layer therebetween in a first direction, and having a first surface and a second surface opposing each other in the first direction, a third surface and a fourth surface connected to the first and second surfaces and opposing each other in a second direction, and a fifth surface and a sixth surface connected to the first to fourth surfaces and opposing each other in a third direction. The first internal electrode layer includes a first internal electrode exposed to the fifth and sixth surfaces and a first dummy electrode disposed spaced apart from the first internal electrode, and the second internal electrode layer includes a second internal electrode exposed to the third to sixth surfaces and a second dummy electrode disposed spaced apart from the second internal electrode. A first external electrode is disposed on the third, fifth, and sixth surfaces and connected to at least an exposed portion of the second internal electrode; a second external electrode is disposed on the fourth, fifth, and sixth surfaces and connected to the second internal electrode; a third external electrode is disposed on the fifth surface and connected to the first internal electrode; and a fourth external electrode is disposed on the sixth surface and connected to the first internal electrode. The first dummy electrode overlaps an exposed portion of the second internal electrode in the first direction, and the second dummy electrode overlaps an exposed portion of the first internal electrode in the first direction.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an embodiment;
FIG. 2 is a perspective view schematically illustrating a structure of the multilayer electronic component of FIG. 1 with the external electrodes removed;
FIGS. 3A and 3B are perspective views schematically illustrating an internal electrode layer of another embodiment;
FIG. 4 is a perspective view schematically illustrating a multilayer electronic component according to another embodiment;
FIGS. 5A and 5B are perspective views schematically illustrating an internal electrode layer of another embodiment;
FIG. 6 is a perspective view schematically illustrating a multilayer electronic component according to another embodiment;
FIGS. 7A and 7B are perspective views schematically illustrating an internal electrode layer of another embodiment;
FIG. 8 is a perspective view schematically illustrating a multilayer electronic component according to another embodiment; and
FIGS. 9A and 9B are perspective views schematically illustrating an internal electrode layer of another embodiment.

### DETAILED DESCRIPTION

Hereinafter, embodiments of the present disclosure will be described with reference to detailed embodiments and accompanying drawings. However, the embodiments of the present disclosure may be modified in many different forms, and the scope of the present disclosure is not limited to the embodiments described below. In addition, the embodiments of the present disclosure are provided to more completely describe the present disclosure to those skilled in the art. Therefore, the shapes and sizes of elements in the drawings may be exaggerated for clearer explanation, and elements indicated by the same reference numerals in the drawings represent the same elements.

In addition, to clearly describe the present disclosure in the drawings, parts irrelevant to the description are omitted, and the size and thickness of each component illustrated in the drawings are arbitrarily depicted for convenience of description, and thus, the present disclosure is not necessarily limited to the illustrations. Also, components having the same function within the scope of the same concept are described using the same reference numerals. Furthermore, throughout the specification, when a certain component is said to "include," it means that it may further include other components without excluding other components unless otherwise stated.

In the drawing, the first direction may be defined as the stacking direction or the thickness (T) direction, the second direction may be defined as the length (L) direction, and the third direction may be defined as the width (W) direction.

### Multilayer Electronic Component

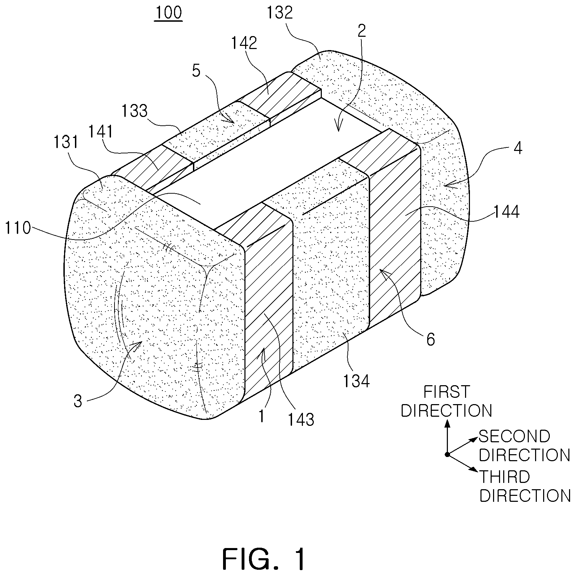

FIG. 1 schematically illustrates a perspective view of a multilayer electronic component according to an embodiment.

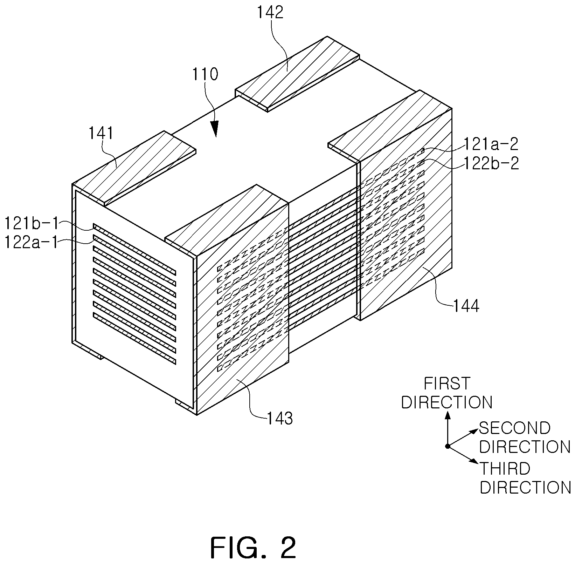

FIG. 2 is a perspective view schematically illustrating a structure in which an external electrode is removed from the multilayer electronic component of FIG. 1.

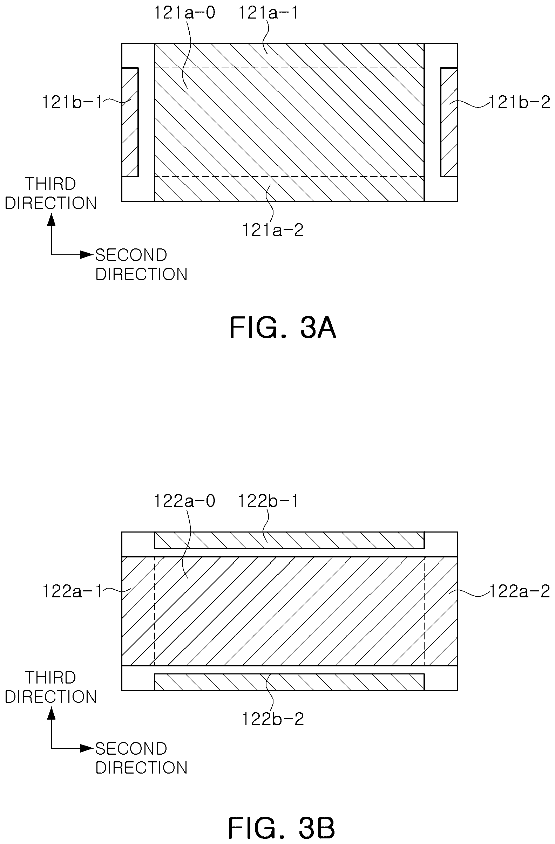

FIGS. 3A and 3B are perspective views schematically illustrating an internal electrode layer of an embodiment.

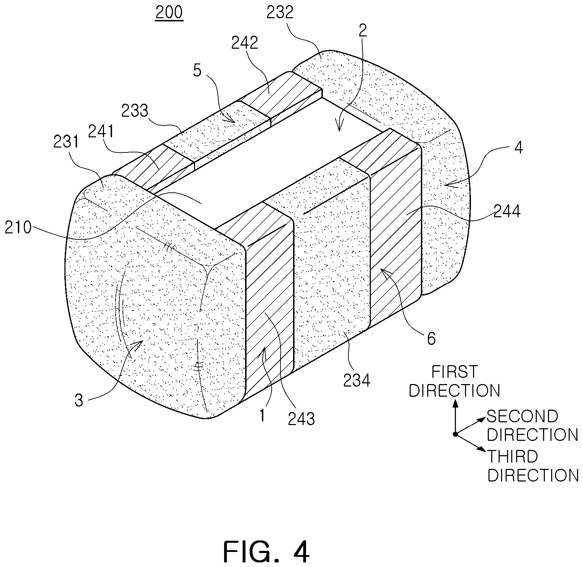

FIG. 4 is a perspective view schematically illustrating a multilayer electronic component according to another embodiment.

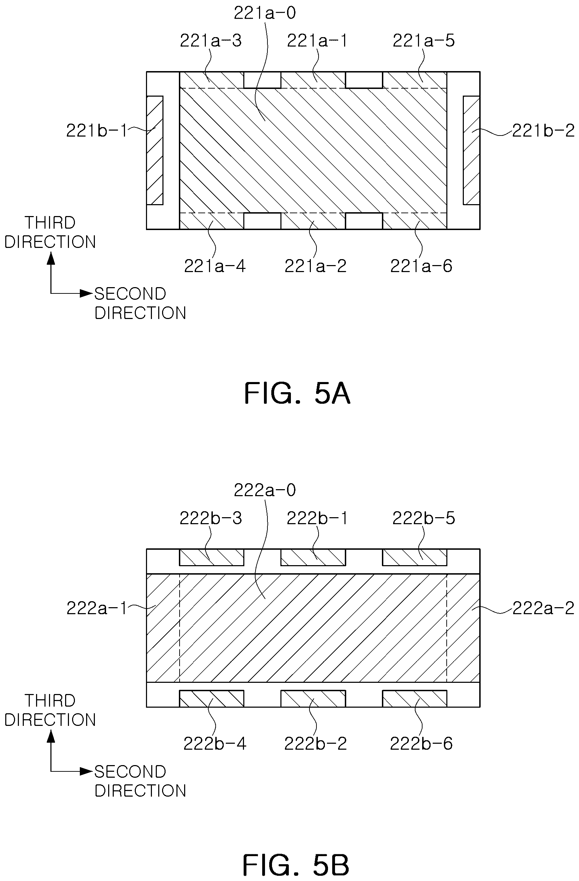

FIGS. 5A and 5B are perspective views schematically illustrating an internal electrode layer of another embodiment.

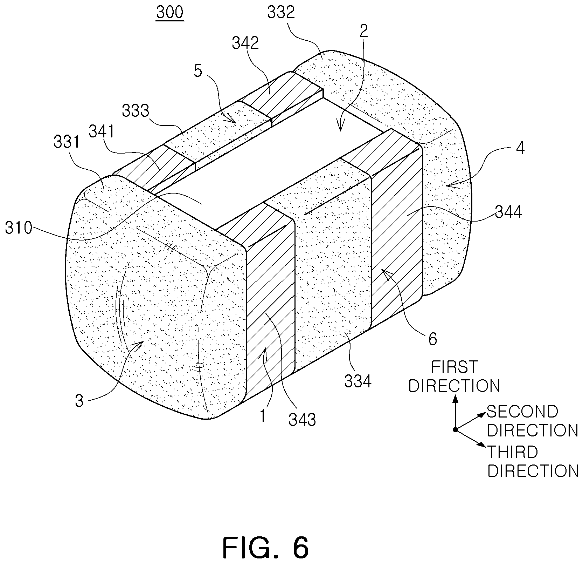

FIG. 6 is a perspective view schematically illustrating a multilayer electronic component according to another embodiment.

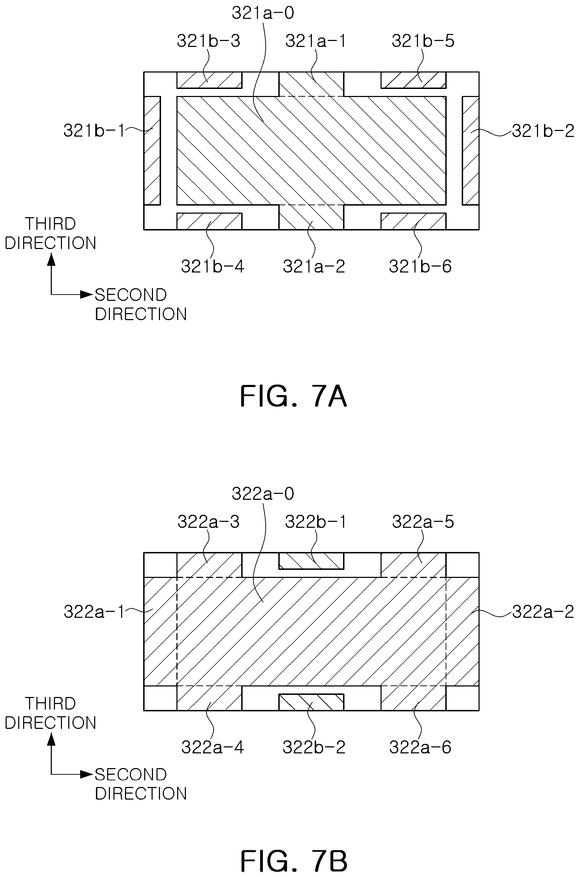

FIGS. 7A and 7B are perspective views schematically illustrating an internal electrode layer of another embodiment.

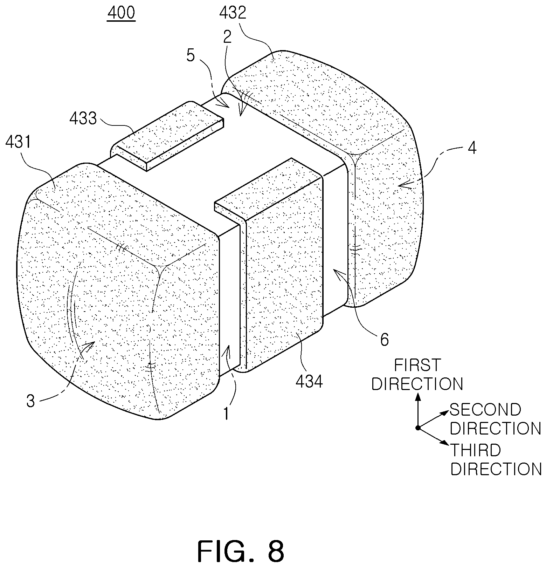

FIG. 8 is a perspective view schematically illustrating a multilayer electronic component according to another embodiment.

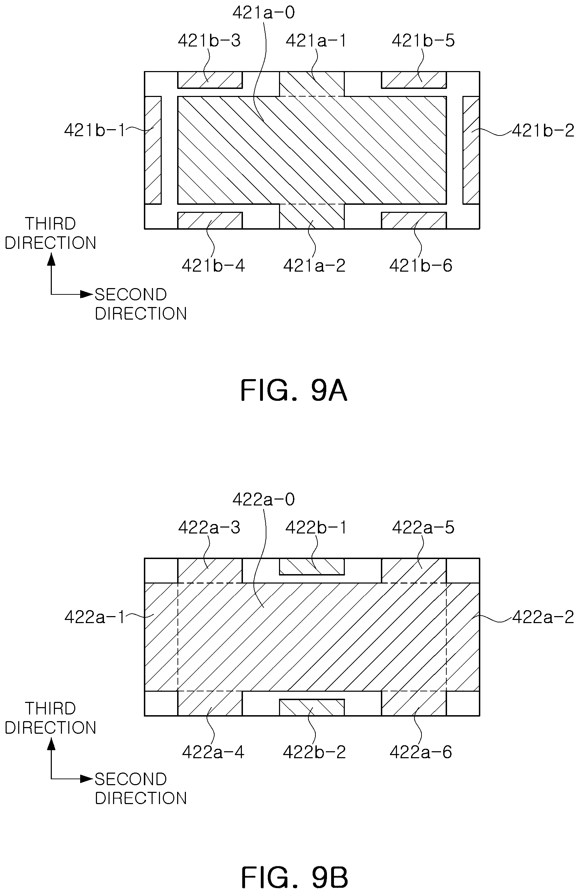

FIGS. 9A and 9B are perspective views schematically illustrating an internal electrode layer of another embodiment.

Hereinafter, referring to FIGS. 1 to 9, a multilayer electronic component according to an embodiment will be described in detail. However, although a multilayer ceramic capacitor is described as an example of a multilayer electronic component, the present disclosure may be applied to various electronic products using a dielectric composition, such as inductors, piezoelectric elements, varistors, or thermistors.

A multilayer electronic component 100 according to an embodiment may include a body 110 comprising a dielectric layer 111 and first and second internal electrode layers 121 and 122 alternately disposed with the dielectric layer 111 interposed therebetween in a first direction, and having first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction. The first internal electrode layer 121 includes a first internal electrode 121a exposed to the fifth and sixth surfaces 5 and 6, and a first dummy electrode 121b disposed spaced apart from the first internal electrode 121a, and the second internal electrode layer 122 includes a second internal electrode 122a exposed to the third and fourth surfaces 3 and 4, and a second dummy electrode 122b disposed spaced apart from the second internal electrode 122a; first and second external electrodes 131 and 132 disposed on the third and fourth surfaces 3 and 4 respectively and connected to the second internal electrode 122a; third and fourth external electrodes 133 and 134 disposed on the fifth and sixth surfaces 5 and 6 respectively and connected to the first internal electrode 121a; first and second insulating portions 141 and 142 disposed spaced apart from each other in the second direction with the third external electrode 133 interposed therebetween on the fifth surface 5; and third and fourth insulating portions 143 and 144 disposed spaced apart from each other in the second direction with the fourth external electrode 134 interposed therebetween on the sixth surface 6. The first dummy electrode 121b may overlap the exposed portion of the second internal electrode 122a in the first direction, and the second dummy electrode 122b may overlap the exposed portion of the first internal electrode 121a in the first direction.

A multilayer electronic component 400 according to another embodiment may include a body 410 comprising a dielectric layer 411 and first and second internal electrode layers 421 and 422 alternately disposed in the first direction with the dielectric layer 411 interposed therebetween, and having first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction. The first internal electrode layer 421 includes a first internal electrode 421a exposed to the fifth and sixth surfaces 5 and 6, and a first dummy electrode 421b disposed spaced apart from the first internal electrode 421a, and the second internal electrode layer 422 includes a second internal electrode 422a exposed to the third to sixth surfaces 3, 4, 5 and 6, and a second dummy electrode 422b disposed spaced apart from the second internal electrode 422a; a first external electrode 431 disposed on the third, fifth, and sixth surfaces 3, 5 and 6 and connected to the second internal electrode 422a; a second external electrode 432 disposed on the fourth, fifth and sixth surfaces 4, 5 and 6 and connected to the second internal electrode 422a; a third external electrode 433 disposed on the fifth surface 5 and connected to the first internal electrode 421a; and a fourth external electrode 434 disposed on the sixth surface 6 and connected to the first internal electrode 421a. The first dummy electrode 421b overlaps the exposed portion of the second internal electrode 422a in the first direction, and the second dummy electrode 422b may overlap the exposed portion of the first internal electrode 421a in the first direction.

Hereinafter, a multilayer electronic component 100 according to an embodiment will be described, but unless there are special circumstances, the same configuration as the multilayer electronic component 100 according to an embodiment may be equally applied to multilayer electronic components 200, 300 and 400 according to other embodiments of the present disclosure.

The body 110 may have a dielectric layer 111 and internal electrode layers 121 and 122 alternately stacked.

In more detail, the body 110 may include a first internal electrode layer 121 and a second internal electrode layer 122 disposed inside the body 110 and alternately stacked in a first direction with the dielectric layer 111 interposed therebetween.

Although the detailed shape of the body 110 is not particularly limited, as illustrated, the body 110 may have a hexahedral shape or a shape similar thereto. Due to the shrinkage of the ceramic particles included in the body 110 during firing, the body 110 may have a substantially hexahedral shape, although it does not have a perfectly straight hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first to fourth surfaces 1, 2, 3 and 4 and opposing each other in the third direction.

The plurality of dielectric layers 111 forming the body 110 are in a fired state, and the boundary between adjacent dielectric layers 111 is unified to the extent that it is difficult to confirm without using a scanning electron microscope (SEM).

The raw material forming the dielectric layer 111 is not limited as long as sufficient capacitance can be obtained. In general, a perovskite (ABO₃)-based material may be used.For example, a barium titanate-based material, a lead composite perovskite-based material, a strontium titanate-based material or the like may be used. The barium titanate-based material may include BaTiO₃-based ceramic particles. Examples of the ceramic particles, BaTiO₃, or (Ba₁₋ₓCaₓ)TiO₃ (0<x<1, Ba(Ti_{1-y}Ca_{y})O₃ (0<y<1, (Ba₁₋ₓCaₓ)(Ti_{1-y}Zr_{y})O₃ (0<x<1, 0<y<1 or Ba (Ti_{1-y}Zr_{y})O₃ (0<y<1 in which calcium (Ca), zirconium (Zr) or the like is partially solid-solubilized in BaTiO₃, may be provided.

In addition, various ceramic additives, organic solvents, binders, dispersants, and the like may be added to powder such as barium titanate (BaTiO₃), as a raw material forming the dielectric layer 111 depending on the application of the present disclosure.

The thickness of the dielectric layer 111 does not need to be specifically limited.

To ensure reliability of the multilayer electronic component 100 under a high voltage environment, the thickness of the dielectric layer 111 may be 10.0 um or less. In addition, to obtain miniaturization and high capacitance of the multilayer electronic component 100, the thickness of the dielectric layer 111 may be 3.0 um or less, and to more easily obtain ultra-miniaturization and high capacitance, the thickness of the dielectric layer 111 may be 1.0 um or less, in detail, 0.6 um or less, and more specifically, 0.4 um or less.

In this case, the thickness of the dielectric layer 111 refers to the thickness of the dielectric layer 111 disposed between the first and second internal electrode layers 121 and 122.

Meanwhile, the thickness of the dielectric layer 111 refers to the size of the dielectric layer 111 in the first direction. In addition, the thickness of the dielectric layer 111 refers to the average thickness of the dielectric layer 111 and refers to the average size of the dielectric layer 111 in the first direction.

The average size of the dielectric layer 111 in the first direction may be measured by scanning the cross-section of the body 110 in the first and second directions with a scanning electron microscope (SEM) at 10,000x magnification. In more detail, the average size of one dielectric layer 111 in the first direction refers to an average value calculated by measuring the size of one dielectric layer 111 in the first direction at 10 equally spaced points in the second direction in the scanned image. The 10 equally spaced points are designated in the capacitance formation portion. Additionally, if this average value measurement is expanded to 10 dielectric layers 111 and the average value is measured, the average size of the dielectric layers 111 in the first direction may be further generalized.

The internal electrode layers 121 and 122 are alternately stacked with the dielectric layer 111.

The internal electrode layers 121 and 122 include a first internal electrode layer 121 and a second internal electrode layer 122, and the first and second internal electrode layers 121 and 122 are alternately disposed in the first direction with the dielectric layer 111 constituting the body 110, interposed therebetween.

In more detail, the first internal electrode layer 121 include a first internal electrode 121a exposed to the fifth and sixth surfaces 5 and 6, and a first dummy electrode 121b disposed spaced apart from the first internal electrode 121a, and the second internal electrode layer 122 include a second internal electrode 122a exposed to the third and fourth surfaces 3 and 4, and a second dummy electrode 122b disposed to be spaced apart from the second internal electrode 122a.

For example, the first internal electrode 121a is spaced apart from the third and fourth surfaces 3 and 4 and exposed to the fifth and sixth surfaces 5 and 6 to be connected to the third and fourth external electrodes 133 and 134, and the first dummy electrode 121b is exposed to the third and fourth surfaces 3 and 4 to be connected to the first and second external electrodes 131 and 132. However, the present disclosure is not limited thereto, and the first dummy electrode may also be exposed through the fifth and sixth surfaces.

The second internal electrode 122a is spaced apart from the fifth and sixth surfaces 5 and 6 and exposed through the third and fourth surfaces 3 and 4 to be connected to the first and second external electrodes 131 and 132, and the second dummy electrode 122b is exposed through the fifth and sixth surfaces 5 and 6 to be connected to the third and fourth external electrodes 133 and 134.

For example, the first internal electrode 121a is not connected to the first and second external electrodes 131 and 132 and is connected to the third and fourth external electrodes 133 and 134, and the second internal electrode 122a is not connected to the third and fourth external electrodes 133 and 134 but may be connected to the first and second external electrodes 131 and 132.

At this time, the first and second internal electrodes 121a and 122a may be electrically isolated from each other by a dielectric layer 111 disposed between them in the first direction, and may include main portions 121a-0 and 122a-0 that form a capacitance by overlapping in the first direction and lead portions 121a-1, 121a-2, 122a-1 and 122a-2, which do not form a capacitance and are exposed to one surface of the body.

However, the lead portion of the internal electrode exposed to one surface of the body is not limited to one, but may include multiple lead portions. This will be described in more detail below.

In addition, the first dummy electrode 121b may overlap the exposed portions 122a-1 and 122a-2 of the second internal electrode 122a in the first direction, and the second dummy electrode 122b may overlap the exposed portions 121a-1 and 121a-2 of the first internal electrode 121a in the first direction.

As the dummy electrodes 121b and 122b overlap the exposed portions of the internal electrodes 121a and 122a in the first direction, the step portion in the area where the capacitance is not formed may be significantly reduced, and the process work may be simplified when applying the paste, thereby improving the process speed.

Meanwhile, the first and second internal electrodes 121a and 122a may have substantially constant sizes in the second direction and substantially constant sizes in the third direction, respectively.Alternatively, the areas 121a-1, 121a-2, 122a-1 and 122a-2 exposed through one surface of the body among the first and second internal electrodes may have substantially constant sizes in the second direction and substantially constant sizes in the third direction, respectively.

In this case, the term "substantially constant sizes in the second direction" may mean that the second direction sizes are 5% or less based on the average value of the second direction maximum size and the second direction minimum size, and this definition also applies to the substantially constant sizes in the third direction

Meanwhile, the body 110 may be formed by alternately stacking a first ceramic green sheet on which a first internal electrode layer 121 is printed and a second ceramic green sheet on which a second internal electrode layer 122 is printed, and then firing the stack.

Materials forming the internal electrode layers 121 and 122 are not particularly limited, and materials with excellent electrical conductivity may be used. For example, the internal electrode layers 121 and 122 may include at least one of nickel (Ni), copper (Cu), palladium (Pd), silver (Ag), gold (Au), platinum (Pt), tin (Sn), tungsten (W), titanium (Ti) and alloys thereof.

Additionally, the internal electrode layers 121 and 122 may be formed by printing a conductive paste for internal electrodes, containing at least one of nickel (Ni), copper (Cu), palladium (Pd), silver (Ag), gold (Au), platinum (Pt), tin (Sn), tungsten (W), titanium (Ti) and alloys thereof, onto a ceramic green sheet. The printing method for the conductive paste for internal electrodes may be screen printing or gravure printing, and the present disclosure is not limited thereto.

Meanwhile, the thickness of the internal electrode layers 121 and 122 does not need to be particularly limited.

To ensure reliability under a high-voltage environment of the multilayer electronic component 100, the thickness of the internal electrode layers 121 and 122 may be 3.0 um or less. In addition, to achieve miniaturization and high capacitance of the multilayer electronic component 100, the thickness of the internal electrode layers 121 and 122 may be 1.0 um or less, and to more easily obtain ultra-miniaturization and high capacitance, the thickness of the internal electrode layers 121 and 122 may be 0.6 um or less, and more specifically, 0.4 um or less.

In this case, the thickness of the internal electrode layers 121 and 122 refers to the size of the internal electrode layers 121 and 122 in the first direction. In addition, the thickness of the internal electrode layers 121 and 122 refers to the average thickness of the internal electrode layers 121 and 122 or the average size in the first direction .

The first direction average size of the internal electrode layers 121 and 122 may be measured by scanning the cross-sectional image of the body 110 in the first and second directions with a scanning electron microscope (SEM) at 10,000x magnification. In more detail, the first direction average size of one internal electrode layer is an average value calculated by measuring the first direction size of one internal electrode layer at 10 equally spaced points in the second direction in the scanned image. The 10 equally spaced points are designated in the capacitance formation portion. In addition, if this average value measurement is extended to 10 internal electrode layers and the average value is measured, the first direction average size of the internal electrode layers may be more generalized.

Meanwhile, in an embodiment, when the average thickness of at least one of the plurality of dielectric layers 111 is td and the average thickness of at least one of the plurality of internal electrode layers 121 and 122 is te, 2×te < td may be satisfied.

More specifically, the average thickness td of one dielectric layer 111 may be greater than twice the average thickness te of one of the internal electrode layers 121 and 122. In detail, the average thickness td of the plurality of dielectric layers 111 may be greater than twice the average thickness te of the plurality of internal electrode layers 121 and 122.

Generally, reliability issues due to a decrease in the breakdown voltage (BDV) under a high-voltage environment are a major concern for high-voltage electrical electronic components.

Therefore, to prevent a decrease in the breakdown voltage under a high-voltage environment, the average thickness td of the dielectric layer 111 may be greater than twice the average thickness te of the internal electrode layers 121 and 122, thereby increasing the thickness of the dielectric layer, which is the distance between the internal electrode layers, and improving the breakdown voltage characteristics.

If the average thickness td of the dielectric layer 111 is twice or less than twice the average thickness te of the internal electrode layers 121 and 122, the average thickness of the dielectric layer, which is the distance between the internal electrode layers, may be too thin. Thus, the breakdown voltage may deteriorate, and a short circuit could occur between the internal electrode layers.

Meanwhile, the body 110 may include a cover portion disposed on both end surfaces of the capacitance formation portion in the first direction.

More specifically, the body 110 may include a first cover portion disposed on one surface of the capacitance formation portion in the first direction and a second cover portion disposed on the other surface of the capacitance formation portion in the first direction, and in more detail, may include an upper cover portion disposed on the upper portion of the capacitance formation portion in the first direction and a lower cover portion disposed on the lower portion of the capacitance formation portion in the first direction.

The upper cover portion and the lower cover portion may be formed by stacking a single dielectric layer 111 or two or more dielectric layers 111 on the upper and lower surfaces of the capacitance formation portion in the first direction, respectively, and primarily serve to protect the internal electrode layers 121 and 122 due to physical or chemical stress.

The upper cover portion and the lower cover portion do not include the internal electrode layers 121 and 122 and may include the same material as the dielectric layer 111. For example, the upper cover portion and the lower cover portion may be composed of a ceramic material, for example, a barium titanate (BaTiO₃)-based ceramic material.

Meanwhile, the thickness of the cover portion does not need to be specifically limited.

However, to more easily achieve miniaturization and high capacitance of the multilayer electronic component, the thickness of the cover portion may be 100 um or less, more specifically 30 um or less, and in more detail, 20 um or less in ultra-small products.

In this case, the thickness of the cover portion refers to the size of the cover portion in the first direction. In addition, the thickness of the cover portion may refer to the average thickness of the cover portion, and may refer to the average size of the cover portion in the first direction.

The average size of the cover portion in the first direction may be measured by scanning an image of the cross-section of the body 110 in the first and second directions with a scanning electron microscope (SEM) at 10,000x magnification. More specifically it refers to an average value calculated by measuring the first direction size at 10 points equally spaced in the second direction in an image obtained by scanning one cover portion.

In addition, the first direction average size of the cover portion measured by the above-described method may have a size substantially equal to the first direction average size of the cover portion in the first and third direction cross-section of the body 110.

In an embodiment, a structure in which a multilayer electronic component 100 has four external electrodes 131, 132, 133 and 134 is described, but the number or shape of the external electrodes 131, 132, 133 and 134 may be changed depending on the shape of the internal electrode layers 121 and 122 or other uses.

External electrodes 131, 132, 133 and 134 may be placed on the body 110 and connected to the internal electrode layers 121 and 122.

In more detail, the external electrodes 131 and 132 may include a first external electrode 131 disposed on the third surface 3 of the body 110 and connected to the second internal electrode 122a, a second external electrode 132 disposed on the fourth surface 4 of the body 110 and connected to the second internal electrode 122a, a third external electrode 133 disposed on the fifth surface 5 of the body 110 and connected to the first internal electrode 121a, and a fourth external electrode 134 disposed on the sixth surface 6 of the body 110 and connected to the first internal electrode 121a.

In addition, the first and second external electrodes 131 and 132 may extend to portions of the first and second surfaces 1 and 2 of the body 110, or may be disposed to extend to portions of the fifth and sixth surfaces 5 and 6 of the body 110. For example, the first external electrode 131 may be disposed on portions of the first, second, fifth, and sixth surfaces 1, 2, 5 and 6 of the body 110 and on the third surface 3 of the body 110, and the second external electrode 132 may be disposed on portions of the first, second, fifth, and sixth surfaces 1, 2, 5 and 6 of the body 110 and on the fourth surface 4 of the body 110.

The third and fourth external electrodes 133 and 134 may be disposed to extend to portions of the first and second surfaces 1 and 2 of the body 110. For example, the third external electrode 133 may be disposed on portions of the first and second surfaces 1 and 2 of the body 110 and on the fifth surface 5 of the body 110, and the fourth external electrode 134 may be disposed on portions of the first and second surfaces 1 and 2 of the body 110 and on the sixth surface 6 of the body 110.

Meanwhile, the external electrodes 131, 132, 133 and 134 may be formed using may be formed using any electrically conductive material, such as metal, and a detailed material may be determined in consideration of electrical characteristics, structural stability, or the like, and may also have a multilayer structure.

For example, the external electrodes 131, 132, 133 and 134 may include an electrode layer disposed on the body 110 and a plating layer disposed on the electrode layer.

For a more detailed example of the electrode layer, the electrode layer may include a first electrode layer, which is a fired electrode composed of a first conductive metal and glass, or a second electrode layer, which is a resin-based electrode including a second conductive metal and resin.

In this case, the conductive metal included in the first electrode layer may be referred to as a first conductive metal, and the conductive metal included in the second electrode layer may be referred to as a second conductive metal. In this case, the first conductive metal and the second conductive metal may be the same or different from each other, and in the case of including a plurality of conductive metals, only some thereof may include the same conductive metal, but the present disclosure is not particularly limited thereto.

Additionally, the electrode layer may be in the form of a fired electrode and a resin-based electrode sequentially formed on the body 110.

Additionally, the electrode layer may be formed by transferring a sheet containing a conductive metal onto the body, or may be formed by transferring a sheet containing a conductive metal onto a fired electrode.

A material with excellent electrical conductivity may be used as the conductive metal included in the electrode layer, and for example, the conductive metal may consist of at least one selected from the group consisting of nickel (Ni), copper (Cu), palladium (Pd), silver (Ag), gold (Au), platinum (Pt), tin (Sn), tungsten (W), titanium (Ti), and alloys thereof, but is not particularly limited thereto.

The electrode layer may have a two-layer structure including a first electrode layer and a second electrode layer, and accordingly, the external electrodes 131, 132, 133 and 134 may include a first electrode layer including a first conductive metal and glass, and a second electrode layer disposed on the first electrode layer and including a second conductive metal and resin.

The first electrode layer may play a role in improving bonding with the body 110 by including glass, and the second electrode layer plays a role in improving bending strength by including resin.

The first conductive metal included in the first electrode layer is not particularly limited as long as it is a material that may be electrically connected to the internal electrode layers 121 and 122 for forming capacitance, and may include, for example, at least one selected from the group consisting of nickel (Ni), copper (Cu), palladium (Pd), silver (Ag), gold (Au), platinum (Pt), tin (Sn), tungsten (W), titanium (Ti), and alloys thereof.

The first electrode layer may be formed by applying a conductive paste prepared by adding glass frit to the first conductive metal particles and then firing the mixture.

The second conductive metal included in the second electrode layer may play a role in electrically connecting with the first electrode layer.

The conductive metal included in the second electrode layer is not particularly limited as long as it is a material that may be electrically connected to the electrode layer, and may include at least one selected from the group consisting of nickel (Ni), copper (Cu), palladium (Pd), silver (Ag), gold (Au), platinum (Pt), tin (Sn), tungsten (W), titanium (Ti), and alloys thereof.

The second conductive metal included in the second electrode layer may include at least one of spherical particles or flake-shaped particles. For example, the second conductive metal may be composed solely of flake-shaped particles, solelyof spherical particles, or a mixture of flake-shaped particles and spherical particles. In this case, the spherical particles may also include a shape other than a perfect spherical shape, and for example, may include a shape having a length ratio of the major axis to the minor axis (major axis/minor axis) of 1.45 or less. The flake-shaped particles refer to particles having a flat and elongated shape, and although not particularly limited, for example, the length ratio of the major axis to the minor axis (major axis/minor axis) may be 1.95 or more. The lengths of the major and minor axes of the above spherical particles and flake-shaped particles may be measured from images obtained by scanning the first and second cross-sections cut from the central portion of the multilayer electronic component in the third direction using a scanning electron microscope (SEM).

The resin included in the second electrode layer plays the role of securing bonding properties and absorbing shocks. The resin included in the second electrode layer is not particularly limited as long as it has bonding properties and shock absorbing properties and may be mixed with the second conductive metal particles to form a paste, and may include, for example, an epoxy-based resin.

In addition, the second electrode layer may include a plurality of second conductive metal particles, an intermetallic compound, and a resin. By including the intermetallic compound, the electrical connectivity with the first electrode layer may be further improved. The intermetallic compound connects multiple metal particles to improve electrical connectivity, and may surround and bind multiple metal particles.

In this case, the intermetallic compound may include a metal having a melting point lower than the curing temperature of the resin. For example, since the intermetallic compound includes a metal having a melting point lower than the curing temperature of the resin, the metal having a melting point lower than the curing temperature of the resin melts during the drying and curing process, forms an intermetallic compound with some of the metal particles, and surrounds the metal particles.Specifically, the intermetallic compound may includea low melting point metal of 300°C or less.

For example, Sn with a melting point of 213 to 220°C may be included. During the drying and curing process, Sn is melted, and the melted Sn wets high-melting-point metal particles such as Ag, Ni or Cu by capillary action, and reacts with some of the Ag, Ni or Cu metal particles to form intermetallic compounds such as Ag₃Sn, Ni₃Sn₄, Cu₆Sn₅, Cu₃Sn, and the like. Ag, Ni or Cu that does not participate in the reaction remains in the form of metal particles.

Therefore, the plurality of second conductive metal particles may include at least one of Ag, Ni or Cu, and the intermetallic compound may include at least one of Ag₃Sn, Ni₃Sn₄, Cu₆Sn₅ or Cu₃Sn.

The plating layer plays a role in improving mounting characteristics.

The type of plating layer is not particularly limited and may be plating layers 131c and 132c of a single layer containing at least one of nickel (Ni), tin (Sn), silver (Ag), palladium (Pd), or alloys thereof, or may be formed of multiple layers.

For example, the plating layer may be a Ni plating layer or a Sn plating layer, and may be in the form in which a Ni plating layer and a Sn plating layer are formed sequentially on the electrode layer. Alternatively, it may be in the form where the Sn plating layer, Ni plating layer, and Sn plating layer are formed sequentially. Additionally, the plating layer may include a plurality of Ni plating layers and/or a plurality of Sn plating layers.

An embodiment may include an insulating portion 141, 142, 143 and 144 disposed on a body 110.

The insulating portions 141, 142, 143 and 144 are connected to the internal electrode layers 121 and 122 exposed on one surface of the body 110, and may be disposed, in detail, more specifically, to cover the exposed internal electrode layers 121 and 122.

More specifically, the insulating portions 141, 142, 143 and 144 may include first and second insulating portions 141 and 142 spaced apart from each other in the second direction with the third external electrode 133 interposed therebetween on the fifth surface 5, and third and fourth insulating portions 143 and 144 spaced apart from each other in the second direction with the fourth external electrode 134 interposed therebetween on the sixth surface 6.

At this time, the first and second insulating portions 141 and 142 may be connected to the lead portion 121a-1 of the first internal electrode and the first dummy electrode 122b-1, which are exposed on the fifth surface 5, respectively, and the third and fourth insulating portions 143 and 144 may be connected to the lead portion 121a-2 of the first internal electrode and the first dummy electrode 122b-2, exposed to the sixth surface 6, respectively.

For example, the lead portion 121a-1 of the first internal electrode and the first dummy electrode 122b-1, exposed to the fifth surface 5, respectively, may be be covered by the first insulating portion 141, the third external electrode 133 and the second insulating portion 142 and connected to each other, and the lead portion 121a-2 of the first internal electrode and the first dummy electrode 122b-2, exposed to the sixth surface 6, respectively, may be disposed to be covered by the third insulating portion 142, the fourth external electrode 134 and the fourth insulating portion 144 and connected to each other.

As the insulating portions 141, 142, 143 and 144 are disposed to cover the internal electrode layers 121 and 122 exposed on one surface of the body, external moisture penetration may be suppressed, thereby improving moisture resistance reliability. In addition, to significantly reduce the mounting area of the third and fourth external electrodes 133 and 134, the size of the third and fourth external electrodes 133 and 134 is reduced, and thus, even when the area of the exposed internal electrode layers 121 and 122 increases, the area may be sufficiently covered by the insulating portions 141, 142, 143 and 144. Therefore, the area of the mounted pad may be significantly reduced while also providing excellent moisture resistance reliability.

There is no need to specifically limit the size of the multilayer electronic component 100. However, to obtain miniaturization and high capacitance simultaneously , the thickness of the dielectric layer and the internal electrode should be reduced to increase the number of layers, and thus, the effect according to the present disclosure may be more significant in a multilayer electronic component 100 having a size of 3216 (length × width: 3.2 mm × 1.6 mm) or less.

Hereinafter, the present disclosure will be described in more detail through various embodiments, but these are provided to facilitate a deeper understanding of the present disclosure, and the scope of the present disclosure is not limited by the embodiments.

### First Embodiment:

Hereinafter, a multilayer electronic component 100 according to an embodiment will be described with reference to FIGS. 1 to 3.

A multilayer electronic component 100 includes a body 110 including a dielectric layer 111 and first and second internal electrode layers 121 and 122 alternately disposed in a first direction with the dielectric layer 111 interposed between them, and including first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3, and 4 and opposing each other in the third direction, the first internal electrode layer 121 including a first internal electrode 121a exposed to the fifth and sixth surfaces 5 and 6 and a first dummy electrode 121b disposed spaced apart from the first internal electrode 121a, and the second internal electrode layer 122 including a second internal electrode 122a exposed to the third and fourth surfaces 3 and 4 and a second dummy electrode 122b spaced apart from the second internal electrode 122a; first and second external electrodes 131 and 132 disposed on the third and fourth surfaces 3 and 4, respectively, and connected to the second internal electrode 122a; third and fourth external electrodes 133 and 134 disposed on the fifth and sixth surfaces 5 and 6 and connected to the first internal electrode 121a; first and second insulating portions 141 and 142 disposed to be spaced apart from each other in the second direction with the third external electrode 133 interposed between them on the fifth surface 5; and third and fourth insulating portions 143 and 144 disposed to be spaced apart from each other in the second direction with the fourth external electrode 134 interposed therebetween on the sixth surface 6. The first dummy electrode 121b overlaps the exposed portion of the second internal electrode 122a in the first direction, and the second dummy electrode 122b may overlap the exposed portion of the first internal electrode 121a in the first direction.

In more detail, the first internal electrode 121a may include a first main portion 121a-0, and first lead portions 121a-1 and 121a-2 extending from the first main portion 121a-0, the first lead portions 121a-1 and 121a-2 may include a 1-1 lead portion 121a-1 exposed to the fifth surface 5 and at least partially connected to the third external electrode 133, and a 1-2 lead portion 121a-2 exposed to the sixth surface 6 and at least partially connected to the fourth external electrode 134, the first dummy electrode 121b may include a 1-1 dummy electrode 121b-1 exposed to the third surface 3, and a 1-2 dummy electrode 121b-2 positioned apart from the 1-1 dummy electrode 121b-1 and exposed to the fourth surface 4, the second internal electrode 122a may include a second main portion 122a-0 and second lead portions 122a-1 and 122a-2 extending from the second main portion 122a-0, the second lead portions 122a-1 and 122a-2 may include a 2-1 lead portion 122a-1 exposed to the third surface 3 and connected to the first external electrode 131 and a 2-2 lead portion 122a-2 exposed to the fourth surface 4 and connected to the second external electrode 132, and the second dummy electrodes 122b-1 and 122b-2 may include a 2-1 dummy electrode 122b-1 exposed to the fifth surface 5 and a 2-2 dummy electrode 122b-2 exposed to the sixth surface 6. The 1-1 dummy electrode 121b-1 overlaps the 2-1 lead portion 122a-1 in the first direction, the 1-2 dummy electrode 121b-2 overlaps the 2-2 lead portion 122a-2 in the first direction, the 2-1 dummy electrode 122b-1 overlaps the 1-1 lead portion 121a-1 in the first direction, and the 2-2 dummy electrode 122b-2 may overlap the 1-2 lead portion 121a-2 in the first direction.

In this case, at least a portion of the 1-1 lead portion 121a-1 may be further connected to the first and second insulating portions 141 and 142, and at least a portion of the 1-2 lead portion 121a-2 may be further connected to the third and fourth insulating portions 143 and 144.

### Second Embodiment:

Hereinafter, a multilayer electronic component 200 according to another embodiment will be described with reference to FIGS. 4 and 5.

The same configuration or description as that of the multilayer electronic component 100 will be omitted, but those skilled in the art will be able to easily understand it.

In the multilayer electronic component 200, the 1-1 lead portions 221a-1, 221a-3 and 221a-5 are spaced apart from each other and include a 1-1-1 lead portion 221a-1 that is connected to the third external electrode 233, a 1-1-2 lead portion 221a-3 that is connected to the first insulating portion 241, and a 1-1-3 lead portion 221a-5 that is connected to the second insulating portion 242, the 1-2 lead portions 221a-2, 221a-4 and 221a-6 are spaced apart from each other and include a 1-2-1 lead portion 221a-2 that is connected to the fourth external electrode 234, a 1-2-2 lead portion 221a-4 that is connected to the third insulating portion 243, and a 1-2-3 lead portion 221a-6 that is connected to the fourth insulating portion 244, the 2-1 dummy electrodes 222b-1, 222b-3 and 222b-5 are spaced apart from each other and include a 2-1-1 dummy electrode 222b-1 that overlaps the 1-1-1 lead portion 221a-1 in the first direction, a 2-1-2 dummy electrode 222b-3 that overlaps the 1-1-2 lead portion 221a-3 in the first direction, and a 2-1-3 dummy electrode 222b-5 that overlaps the 1-1-3 lead portion 221a-5 in the first direction, the 2-2 dummy electrodes 222b-2, 222b-4 and 222b-6 are spaced apart from each other and include a 2-2-1 dummy electrode 222b-2 that overlaps the 1-2-1 lead portion 221a-2 in the first direction, a 2-2-2 dummy electrode 222b-4 that overlaps the 1-2-2 lead portion 221a-4 in the first direction, and a 2-2-3 dummy electrode 222b-6 that overlaps the 1-2-3 lead portion 221a-6 in the first direction.

### Third Embodiment:

Hereinafter, a multilayer electronic component 300 according to another embodiment will be described with reference to FIGS. 6 and 7.

The same configuration or description as that of the multilayer electronic components 100 and 200 will be omitted, but those skilled in the art will be able to easily understand it.

In the multilayer electronic component 300, the second lead portions 322a-1, 322a-2, 322a-3, 322a-4, 322a-5 and 322a-6 may further include 2-3 lead portions 322a-3 and 322a-5 exposed to the fifth surface 5 and 2-4 lead portions 322a-4 and 322a-6 exposed to the sixth surface 6, the 2-3 lead portions 322a-3 and 322a-5 may be spaced apart from each other and may include a 2-3-1 lead portion 322a-3 that is connected to the first insulating portion 341 and a 2-3-2 lead portion 322a-5 that is connected to the second insulating portion 342, the 2-4 lead portions 322a-4 and 322a-6 may be spaced apart from each other and may include a 2-4-1 lead portion 322a-4 that is connected to the third insulating portion 343 and a 2-4-2 lead portion 322a-6 that is connected to the fourth insulating portion 344, the first dummy electrode 321b may further include 1-3 dummy electrodes 321b-3 and 321b-5 exposed to the fifth surface 5 and 1-4 dummy electrodes 321b-4 and 321b-6 exposed to the sixth surface 6, the 1-3 dummy electrodes 321b-3 and 321b-5 may be spaced apart from each other and may include a 1-3-1 dummy electrode 321b-3 that overlaps the 2-3-1 lead portion 322a-3 in the first direction and a 1-3-2 dummy electrode 321b-5 that overlaps the 2-3-2 lead portion 322a-5 in the first direction, and the 1-4 dummy electrodes 321b-4 and 321b-6 may be spaced apart from each other and may include a 1-4-1 dummy electrode 321b-4 that overlaps the 2-4-1 lead portion 322a-4 in the first direction and a 1-4-2 dummy electrode 321b-6 that overlaps the 2-4-2 lead portion 322a-6 in the second direction.

### Fourth Embodiment:

Hereinafter, a multilayer electronic component 400 according to another embodiment will be described with reference to FIGS. 8 and 9.

A multilayer electronic component 400 according to another embodiment may include the same configuration as the multilayer electronic components 100, 200 and 300 except that it does not include an insulating portion, and the same configuration or description excluding the insulating portion will be omitted, but those skilled in the art will be able to easily understand it.

The multilayer electronic component 400 includes a body 410 including a dielectric layer 411 and first and second internal electrode layers 421 and 422 alternately disposed in a first direction with the dielectric layer 411 interposed therebetween, and including first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction, the first internal electrode layer 421 including a first internal electrode 421a exposed to the fifth and sixth surfaces 5 and 6 and a first dummy electrode 421b disposed spaced apart from the first internal electrode 421a, and the second internal electrode layer 422 including a second internal electrode 422a exposed to the third to sixth surfaces 3 4, 5 and 6 and a second dummy electrode 422b disposed spaced apart from the second internal electrode 422a; a first external electrode 431 disposed on the third, fifth, and sixth surfaces 3, 5 and 6 and connected to the second internal electrode 422a; a second external electrode 432 disposed on the fourth, fifth and sixth surfaces 4, 5 and 6 and connected to the second internal electrode 422a; a third external electrode 433 disposed on the fifth surface 5 and connected to the first internal electrode 421a; and a fourth external electrode 434 disposed on the sixth surface 6 and connected to the first internal electrode 421a. The first dummy electrode 421b overlaps the exposed portion of the second internal electrode 422a in the first direction, and the second dummy electrode 422b may overlap the exposed portion of the first internal electrode 421a in the first direction.

In this case, the second lead portions 422a-1, 422a-2, 422a-3, 422a-4, 422a-5 and 422a-6 further include 2-3 lead portions 422a-3 and 422a-5 exposed to the fifth surface 5, and 2-4 lead portions 422a-4 and 422a-6 exposed to the sixth surface 6, the 2-3 lead portions 422a-3 and 422a-5 may be spaced apart from each other and includes a 2-3-1 lead portion 422a-3 that is connected to the first external electrode 431 and a 2-3-2 lead portion 422a-5 that is connected to the second external electrode 432, the 2-4 lead portions 422a-4 and 422a-6 may be spaced apart from each other and includes a 2-4-1 lead portion 422a-4 that is connected to the first external electrode 431 and a 2-4-2 lead portion 422a-6 that is connected to the second external electrode 432, the first dummy electrode 421b further includes 1-3 dummy electrodes 421b-3 and 421b-5 exposed to the fifth surface 5 and 1-4 dummy electrodes 421b-4 and 421b-6 exposed to the sixth surface 6, the 1-3 dummy electrodes 421b-3 and 421b-5 may be spaced apart from each other and includes a 1-3-1 dummy electrode 421b-3 that overlaps the 2-3-1 lead portion 422a-3 in the first direction and a 1-3-2 dummy electrode 421b-5 that overlaps the 2-3-2 lead portion 422a-5 in the first direction, and the 1-4 dummy electrodes 421b-4 and 421b-6 may be spaced apart from each other and includes a 1-4-1 dummy electrode 321b-4 that overlaps the 2-4-1 lead portion 422a-4 in the first direction and a 1-4-2 dummy electrode 421b-6 that overlaps the 2-4-2 lead portion 422a-6 in the second direction.

Although various embodiments of the present disclosure have been described in detail above, the present disclosure is not limited to the above-described embodiments and the accompanying drawings, but is intended to be limited by the appended claims. Therefore, various forms of substitution, modification, and changes will be possible by those skilled in the art within the scope of the technical spirit of the present disclosure described in the claims, which also falls within the scope of the present disclosure.

The expression 'an embodiment' used in this disclosure does not mean the same embodiment, and is provided to emphasize and describe different unique characteristics. However, an embodiment presented above is not excluded from being implemented in combination with features of other embodiments. For example, even if a matter described in one detailed embodiment is not described in another embodiment, it may be understood as a description related to another embodiment unless there is a description contradictory to the matter in another embodiment.

Terms used in this disclosure are only used to describe an embodiment, and are not intended to limit the present disclosure. In this case, singular expressions include plural expressions unless the context clearly indicates otherwise.

As set forth above, according to an embodiment, the step portion of a multilayer electronic component is improved.

The moisture resistance reliability of a multilayer electronic component is improved.

While example embodiments have been illustrated and described above, it will be apparent to those skilled in the art that modifications and variations can be made without departing from the scope of the present disclosure as defined by the appended claims.

## Claims

1. A multilayer electronic component (100) comprising:
a body (110) including a dielectric layer (111) and first and second internal electrode layers (121, 122) alternately disposed with the dielectric layer (111) positioned between them in a first direction, the body (110) further including a first surface (1) and a second surface (2) opposing each other in the first direction, a third surface (3) and a fourth surface (4) connected to the first and second surfaces (1, 2) and opposing each other in a second direction, and a fifth surface (5) and a sixth surface (6) connected to the first to fourth surfaces (1, 2, 3, 4) and opposing each other in a third direction, the first internal electrode layer (121) including a first internal electrode (121a) exposed to the fifth and sixth surfaces (5, 6), and a first dummy electrode (121b) spaced apart from the first internal electrode (121a), and the second internal electrode layer (122) including a second internal electrode (122a) exposed to the third and fourth surfaces (3, 4), and a second dummy electrode (122b) spaced apart from the second internal electrode (122a);
a first external electrode (131) and a second external electrode (132) disposed on the third and fourth surfaces (3, 4), respectively, and connected to the second internal electrode (122a);
a third external electrode (133) and a fourth external electrode (134) disposed on the fifth and sixth surfaces (5, 6), respectively, and connected to the first internal electrode (122a);
a first insulating portion (141) and a second insulating portion (142) spaced apart from each other in the second direction with the third external electrode (133) interposed therebetween on the fifth surface (5); and
a third insulating portion (143) and a fourth insulating portion (144) spaced apart from each other in the second direction with the fourth external electrode (134) interposed therebetween on the sixth surface,
wherein the first dummy electrode (121b) overlaps an exposed portion of the second internal electrode (122a) in the first direction, and the second dummy electrode (122b) overlaps an exposed portion of the first internal electrode (121a) in the first direction.

2. The multilayer electronic component (100) of claim 1, wherein the first to fourth insulating portions (141, 142, 143, 144) are each connected to at least a portion of the exposed portion of the first internal electrode (121a).

3. The multilayer electronic component (100) of claim 1, wherein the first and second internal electrodes (121a, 122a) each have a substantially constant size in the second direction and a substantially constant size in the third direction.

4. The multilayer electronic component (100) of claim 1, wherein regions of the first and second internal electrodes (121a, 122a) that are exposed through one surface of the body each have a substantially constant size in the second direction and a substantially constant size in the third direction.

5. The multilayer electronic component (200) of claim 2, wherein the first internal electrode (221a) is exposed on the fifth and sixth surfaces (5, 6) through a plurality of lead portions (221a-1, 221a-2, 221a-3, 221a-4, 221a-5, 221a-6), and is connected to the third and fourth external electrodes (233, 234) as well as the first to fourth insulating portions (241, 242, 243, 244).

6. The multilayer electronic component (300) of claim 2, wherein the second internal electrode (322a) is further exposed on the fifth and sixth surfaces (5, 6) through a plurality of lead portions (322a-3, 322a-4, 322a-5, 322a-6) and is connected to the first to fourth insulating portions (341, 342, 343, 344).

7. The multilayer electronic component (100) of claim 1, wherein the first internal electrode (121a) includes a first main portion (121a-0), and a first lead portion (121a-1, 121a-2) extending from the first main portion (121a-0), the first lead portion (121a-1, 121a-2) includes a 1-1 lead portion (121a-1) exposed to the fifth surface (5) and at least partially connected to the third external electrode (133), and a 1-2 lead portion (121a-2) exposed to the sixth surface (6) and at least partially connected to the fourth external electrode (134), and the first dummy electrode (121b) includes a 1-1 dummy electrode (121b-1) exposed to the third surface (3), and a 1-2 dummy electrode (121b-2) spaced apart from the 1-1 dummy electrode (121b-1) and exposed to the fourth surface (4),
the second internal electrode (122a) includes a second main portion (122a-0), and a second lead portion (122a-1, 122a-2) extending from the second main portion (122a-0), the second lead portion (122a-1, 122a-2) includes a 2-1 lead portion (122a-1) exposed to the third surface (3) and connected to the first external electrode (131), and a 2-2 lead portion (122a-2) exposed to the fourth surface (4) and connected to the second external electrode (132), and the second dummy electrode (122b) includes a 2-1 dummy electrode (122b-1) exposed to the fifth surface (5) and a 2-2 dummy electrode (122b-2) exposed to the sixth surface (6), and
the 1-1 dummy electrode (121b-1) overlaps the 2-1 lead portion (122a-1) in the first direction, the 1-2 dummy electrode (121b-2) overlaps the 2-2 lead portion (122a-2) in the first direction, the 2-1 dummy electrode (122b-1) overlaps the 1-1 lead portion (121a-1) in the first direction, and the 2-2 dummy electrode (122b-2) overlaps the 1-2 lead portion (121a-2) in the first direction.

8. The multilayer electronic component (200) of claim 7, wherein at least a portion of the 1-1 lead portion (221a-3, 221a-5) is further connected to the first and second insulating portions (241, 242), and at least a portion of the 1-2 lead portion (221a-4, 221a-6) is further connected to the third and fourth insulating portions (243, 244).

9. The multilayer electronic component (200) of claim 8, wherein the 1-1 lead portion (221a-1, 221a-3, 221a-5) includes a 1-1-1 lead portion (221a-1) connected to the third external electrode (233), a 1-1-2 lead portion (221a-3) connected to the first insulating portion (241), and a 1-1-3 lead portion (221a-5) connected to the second insulating portion (242), the 1-1-1 lead portion (221a-1), the 1-1-2 lead portion (221a-3) and the 1-1-3 lead portion (221a-5) being spaced apart from each other, and
the 1-2 lead portion (221a-2, 221a-4, 221a-6) includes a 1-2-1 lead portion (221a-2) connected to the fourth external electrode (234), a 1-2-2 lead portion (221a-4) connected to the third insulating portion (243), and a 1-2-3 lead portion (221a-6) connected to the fourth insulating portion (244), the 1-2-1 lead portion (221a-2), the 1-2-2 lead portion (221a-4) and the 1-2-3 lead portion (221a-6) are spaced apart from each other,
the 2-1 dummy electrode (222b-1, 222b-3, 222b-5) includes a 2-1-1 dummy electrode (221b-1) overlapping the 1-1-1 lead portion (221a-1) in the first direction, a 2-1-2 dummy electrode (222b-3) overlapping the 1-1-2 lead portion (221a-3) in the first direction, and a 2-1-3 dummy electrode (222b-5) overlapping the 1-1-3 lead portion (221a-5) in the first direction, the 2-1-1 dummy electrode (222b-1), the 2-1-2 dummy electrode (222b-3) and the 2-1-3 dummy electrode (222b-5) being disposed to be spaced apart from each other, and
the 2-2 dummy electrode (222b-2, 222b-4, 222b-6) includes a 2-2-1 dummy electrode (222b-2) overlapping the 1-2-1 lead portion (221a-2) in the first direction, a 2-2-2 dummy electrode (222b-4) overlapping the 1-2-2 lead portion (221a-4) in the first direction, and a 2-2-3 dummy electrode (222b-6) overlapping the 1-2-3 lead portion (221a-6) in the first direction, the 2-2-1 dummy electrode (222b-2), the 2-2-2 dummy electrode (222b-4) and the 2-2-3 dummy electrode (222b-6) are spaced apart from each other.

10. The multilayer electronic component (300) of claim 8, wherein the second lead portion (322a) further includes a plurality of 2-3 lead portions (322a-3, 322a-5) exposed to the fifth surface (5), and a plurality of 2-4 lead portions (322-4, 322-6) exposed to the sixth surface (6), wherein the 2-3 lead portion (322a-3, 322a-5)comprises a 2-3-1 lead portion (322a-3) connected to the first insulating portion (341) and a 2-3-2 lead portion (322a-5) connected to the second insulating portion (342), with the 2-3-1 lead portion (322a-3) and the 2-3-2 lead portion (322a-5) being spaced apart from each other, and wherein the 2-4 lead portion (322a-4, 322a-6) comprises a 2-4-1 lead portion (322a-4) connected to the third insulating portion (343) and a 2-4-2 lead portion (322a-6) connected to the fourth insulating portion (344), with the 2-4-1 lead portion (322a-4) and the 2-4-2 lead portion (322a-6) being spaced apart from each other, and
the first dummy electrode (321b) further includes a plurality of 1-3 dummy electrode (321b-3, 321b-5) exposed to the fifth surface (5) and a plurality of 1-4 dummy electrode (321b-4, 321b-6) exposed to the sixth surface (6), wherein the 1-3 dummy electrode (321b-3, 321b-5) includes a 1-3-1 dummy electrode (321b-3) overlapping the 2-3-1 lead portion (322a-3) in the first direction, and a 1-3-2 dummy electrode (321b-5) overlapping the 2-3-2 lead portion (322a-5) in the first direction, with the 1-3-1 dummy electrode (321b-3) and the 1-3-2 dummy electrode (321b-5) being spaced apart from each other, and wherein the 1-4 dummy electrode (321b-4, 321b-6) includes a 1-4-1 dummy electrode (321b-4) overlapping the 2-4-1 lead portion (322a-4) in the first direction and a 1-4-2 dummy electrode (321b-6) overlapping the 2-4-2 lead portion (322a-6) in the second direction, with the 1-4-1 dummy electrode (321b-4) and the 1-4-2 dummy electrode (321b-6) being spaced apart from each other.
